(19) Europäisches Patentamt
European Patent Office
Office européen des brevets

(11) **EP 4 455 612 A1**

(12) **EUROPEAN PATENT APPLICATION**
published in accordance with Art. 153(4) EPC

(43) Date of publication:
**30.10.2024  Bulletin 2024/44**

(21) Application number: **22910583.8**

(22) Date of filing: **27.10.2022**

(51) International Patent Classification (IPC):
*G01C 21/26* (2006.01)   *G01C 21/28* (2006.01)
*G06T 19/00* (2011.01)   *G06T 7/292* (2017.01)
*G06T 7/70* (2017.01)

(52) Cooperative Patent Classification (CPC):
**G01C 21/26; G01C 21/28; G06T 7/292; G06T 7/70; G06T 19/00**

(86) International application number:
**PCT/JP2022/040096**

(87) International publication number:
**WO 2023/119862 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2021  JP 2021206944**

(71) Applicant: Sony Group Corporation
**Tokyo 108-0075 (JP)**

(72) Inventors:
• **KANEKO, Masaya**
  **Tokyo 108-0075 (JP)**
• **KASHITANI, Tatsuki**
  **Tokyo 108-0075 (JP)**
• **ONO, Yuki**
  **Tokyo 108-0075 (JP)**

(74) Representative: **MFG Patentanwälte**
**Meyer-Wildhagen Meggle-Freund Gerhard PartG mbB**
**Amalienstraße 62**
**80799 München (DE)**

(54) **INFORMATION PROCESSING DEVICE, INFORMATION PROCESSING PROGRAM, AND INFORMATION PROCESSING METHOD**

(57) [Object] To perform map synchronization in a manner more intuitive for a user.

[Solving Means] An information processing apparatus includes: a map generating unit that generates a first map and estimates a chronological self-position in the first map, thereby generating the first three-dimensional trajectory; a slave trajectory acquiring unit that acquires the second three-dimensional trajectory generated by estimating the chronological self-position in a second map generated in the map generating unit of a slave apparatus, the slave apparatus being another information processing apparatus that functions as a slave; an observed trajectory generating unit that generates an observed two-dimensional trajectory, the observed two-dimensional trajectory being a two-dimensional trajectory indicating a chronological position of the slave apparatus in a captured image obtained by a camera imaging the slave apparatus; and a transformation parameter calculating unit that calculates a transformation parameter for generating a synchronized map obtained by synchronizing the first map with the second map on the basis of the first three-dimensional trajectory, the second three-dimensional trajectory, and the observed two-dimensional trajectory.

FIG.4

**Description**

Technical Field

The present disclosure relates to an information processing apparatus, an information processing program, and an information processing method that are capable of generating and displaying an AR object of common AR content on a plurality of information processing apparatuses.

Background Art

There is known a terminal application with which a plurality of users respectively holds terminals (smartphones, etc.) and a plurality of terminals respectively shares positions so that common AR content can be respectively displayed on the plurality of terminals.

In order for the plurality of terminals to share their positions in the same map, processing (map synchronization) of determining a transformed coordinate system between maps generated in a self-position estimation process for each terminal is required. Accordingly, it is possible to superimpose common AR content in an AR application between terminals without discomfort.

In general, map synchronization between a terminal A and a terminal B is realized by processing of (1) sending image data to the terminal B from the terminal A, (2) performing image search in a key frame having a field-of-view in a map of the terminal B, the field-of-view being common to the image, and (3) estimating a position in the map on the basis of a feature point correspondence relation and determining a transformed coordinate system. Due to such algorithm characteristics, it is general to "capture a scene image common" to terminals for map synchronization.

Citation List

Patent Literature

Patent Literature 1: WO 2021/106388

Disclosure of Invention

Technical Problem

However, the user who uses the terminal cannot access the map and does not know what like an image retained in the map is and whether or not it is possible to determine a correspondence relation for map synchronization. Therefore, the AR application allows only a non-intuitive instruction, e.g., "to direct the terminal to a similar position," such an operation, for which some training is needed, is a little bit difficult for the user, and thus it may interfere with the sense of immersion into the AR content. In other words, the user often fails map initialization and may not easily understand why the user has failed it.

Patent Literature 1 has disclosed a system for integrating map data on the basis of a correspondence relation between a key frame and a query image saved in map data. However, Patent Literature 1 has not referred to the map initialization problem from the perspective of a user interface with respect to XR (AR, VR, MR, etc.) by a plurality of people.

In view of the above-mentioned circumstances, it is an object of present disclosure to provide an information processing apparatus, an information processing program, and an information processing method that enable map synchronization to be performed in a manner more intuitive for a user.

Solution to Problem

An information processing apparatus according to an embodiment of the present disclosure, including:

a map generating unit that generates a first map and estimates a chronological self-position in the first map, thereby generating the first three-dimensional trajectory;
a slave trajectory acquiring unit that acquires the second three-dimensional trajectory generated by estimating the chronological self-position in a second map generated in the map generating unit of a slave apparatus, the slave apparatus being another information processing apparatus that functions as a slave;
an observed trajectory generating unit that generates an observed two-dimensional trajectory, the observed two-dimensional trajectory being a two-dimensional trajectory indicating a chronological position of the slave apparatus in a captured image obtained by a camera imaging the slave apparatus; and

a transformation parameter calculating unit that calculates a transformation parameter for generating a synchronized map obtained by synchronizing the first map with the second map on the basis of the first three-dimensional trajectory, the second three-dimensional trajectory, and the observed two-dimensional trajectory.

In the present embodiment, the slave apparatus wished to be synchronized is imaged as an intuitive synchronization operation. The operation of directing apparatuses wished to be synchronized to each other is significantly intuitive. Accordingly, the user can enjoy AR content naturally without losing the sense of immersion.

The transformation parameter calculating unit

estimates a two-dimensional trajectory of the slave apparatus and generates an estimated two-dimensional trajectory on the basis of a candidate value of a transformation parameter, the first three-dimensional trajectory, and the second three-dimensional trajectory, and

optimizes the candidate value of the transformation parameter so that the estimated two-dimensional trajectory coincides with the observed two-dimensional trajectory, thereby calculating the transformation parameter.

In the present embodiment, with this map synchronization algorithm, map synchronization of a plurality of apparatuses can be realized by imaging the slave apparatus wished to be synchronized.

The transformation parameter calculating unit

calculates the chronological position of the slave apparatus in the first map on the basis of the first three-dimensional trajectory and the second three-dimensional trajectory, and

optimizes the candidate value of the transformation parameter on the basis of the calculated chronological position of the slave apparatus in the first map.

In the present embodiment, with this map synchronization algorithm, map synchronization of a plurality of apparatuses can be realized by imaging the slave apparatus wished to be synchronized.

The map generating unit transforms the first map on the basis of the transformation parameter, thereby generating the synchronized map.

The information processing apparatus further includes

a transformation parameter providing unit that provides the transformation parameter to the slave apparatus, in which the map generating unit of the slave apparatus transforms the second map on the basis of the transformation parameter, thereby generating the synchronized map.

Accordingly, each apparatus can generate an AR object on the basis of a synchronized map using a synchronized coordinate system as a reference.

The information processing apparatus further includes

an AR executing unit that generates an AR object on the basis of the synchronized map and displays the generated AR object on a display apparatus.

Accordingly, an AR object can be displayed on different apparatuses without discomfort.

The AR executing unit of the information processing apparatus that functions as a master and the AR executing unit of the slave apparatus may generate and display an AR object of common AR content.

Accordingly, an AR object when the common AR content is viewed from another position can be displayed on different apparatuses without discomfort. In other words, each apparatus can display an AR object as one visible when viewing a common AR content located in a particular place from the position of each apparatus without positional contradiction.

The information processing apparatus may further include

a slave trajectory providing unit that provides the second three-dimensional trajectory to another information processing apparatus that functions as a master when the slave trajectory providing unit functions as a slave.

The information processing apparatus may further include the camera, in which

the self-position may include a position and an attitude of the camera.

An information processing method according to an embodiment of the present disclosure includes:

generating a first map and estimating a chronological self-position in the first map, thereby generating the first three-dimensional trajectory;

acquiring the second three-dimensional trajectory generated by estimating the chronological self-position in a second map generated in a map generating unit of a slave apparatus, the slave apparatus being another information processing apparatus that functions as a slave;

generating an observed two-dimensional trajectory, the observed two-dimensional trajectory being a two-dimensional trajectory indicating a chronological position of the slave apparatus in a captured image obtained by a camera imaging the slave apparatus; and

calculating a transformation parameter for generating a synchronized map obtained by synchronizing the first map with the second map on the basis of the first three-dimensional trajectory, the second three-dimensional trajectory, and the observed two-dimensional trajectory.

An information processing program according to an embodiment of the present disclosure causes a control circuit of an information processing apparatus to operate as:

a map generating unit that generates a first map and estimates a chronological self-position in the first map, thereby generating the first three-dimensional trajectory;

a slave trajectory acquiring unit that acquires the second three-dimensional trajectory generated by estimating the chronological self-position in a second map generated in the map generating unit of a slave apparatus, the slave apparatus being another information processing apparatus that functions as a slave;

an observed trajectory generating unit that generates an observed two-dimensional trajectory, the observed two-dimensional trajectory being a two-dimensional trajectory indicating a chronological position of the slave apparatus in a captured image obtained by a camera imaging the slave apparatus; and

a transformation parameter calculating unit that calculates a transformation parameter for generating a synchronized map obtained by synchronizing the first map with the second map on the basis of the first three-dimensional trajectory, the second three-dimensional trajectory, and the observed two-dimensional trajectory.

Brief Description of Drawings

[Fig. 1] Fig. 1 shows a concept of the present embodiment.
[Fig. 2] Fig. 2 shows functional configurations of a master apparatus and a slave apparatus.
[Fig. 3] Fig. 3 shows operation flows of the master apparatus and the slave apparatus.
[Fig. 4] Fig. 4 schematically shows a map synchronization algorithm.
[Fig. 5] Fig. 5 schematically shows display of an AR object.

Mode(s) for Carrying Out the Invention

Hereinafter, embodiments of the present disclosure will be described with reference to the drawings.

1. Background and Concept of Present Embodiment

In an application for AR, VR, or the like, a self-position estimation technology called simultaneous localization and mapping (SLAM) is used for superimposing CG in accordance with device position and attitude (device orientation) without discomfort. Typically, the SLAM operates in each terminal and superimposes CG on its display. Meanwhile, a dramatic development of communication performance, e.g., 5G, has enabled a plurality of terminals to continuously share their relative positions. Accordingly, for example, in AR, a plurality of users can experience the same AR content (e.g., game) together. In VR, even users physically remote from each other can perform interaction, knowing their positional relationship in a digital space.

As a first example, in AR experience of a plurality of people, the plurality of people experience interaction as AR interaction by 5G communication in the same place in real time. At this time, it is necessary to know a relative positional relationship between participants. As a second example, as to VR communities, participants in a virtual space (metabase) in VR physically communicate with each other as avatars. At this time, it is necessary to know a relative positional relationship between the avatars physically remote from each other. As a third example, in robot-to-person/robot cooperation, natural interaction between a person and a robot and cooperation operation between robots are realized. At this time, it is necessary to share positions and maps between different types of devices.

In a case where each terminal individually operates the SLAM, a coordinate system for describing a position is defined for each terminal. Since different coordinate systems have different ways for describing a position, it is essential to integrate map coordinate systems of the respective terminals (map synchronization) in order for the plurality of terminals to share their positions. Therefore, in CoSLAM (position sharing between the plurality of terminals), how to realize map synchronization is very important from the perspective of both an algorithm and a user interface.

Here, how to typically realize map synchronization between the plurality of terminals will be described in detail firstly from the perspective of an internal algorithm and secondly from the perspective of the user interface in an AR application for realizing it.

Firstly, the map synchronization will be described from the perspective of the algorithm. The situation is where while SLAM is independently operating inside each of the terminal A and the terminal B and generating an individual map (map A, map B), map synchronization is wished to be performed, i.e., coordinate systems of the maps are wished to match each other. The map is constituted by a plurality of "past camera attitudes, a feature point group extracted from an image at that time, its local feature amount group, a landmark group which is estimation results of three-dimensional positions of the respective feature points, and an image feature amount for image search" (it is called key frame). Terminals can communicate with each other and can exchange data. This operation can be mathematically considered as "an operation of determining a coordinate transformation parameter $_{mA}T_{mB}$ between the map A and the map B", and it is generally realized by the following algorithm.

(1) The terminal A sends image data and its attitude $_{mA}T_q$ to the terminal B (it is called query image). The terminal B extracts a local feature point, a feature amount, and an image feature amount for image search from the sent query image.
(2) The terminal B performs image search on a key frame having a field-of-view in the map B, which is common to the sent query image. At that time, a candidate is selected because of its close distance to the image feature amount.
(3) The terminal B performs feature point matching based on the local feature amount between the query image and the image-searched candidate key frame. This feature point matching allows determination of a correspondence relation between a two-dimensional feature point position in the image and a three-dimensional landmark in the map B. Therefore, a positional relationship $_{mB}T_q$ of the query image in the map B is estimated so that there is no positional contradiction between them. It is called PnP algorithm.
(4) Since the attitudes in the coordinate systems of the maps A and B have been described with respect to the query image, then, the coordinate transformation parameter $_{mA}T_{mB}$ between the maps A and B can be determined in accordance with Expression (1) below. $_{mA}T_q$ denotes a camera attitude in the query image in the coordinate system of the map A sent from the terminal A. $_{mB}T_q$ denotes a camera attitude in the coordinate system of the map B determined in the above-mentioned procedure.

$$_{mA}T_{mB} = {}_{mA}T_q \times ({}_{mB}T_q)^{-1} \quad ... \quad (1)$$

Due to such algorithm characteristics, an "image having a field-of-view common to the terminals" is essential for map synchronization. In an actual application scene like an AR application where interaction between a plurality of terminals is important, a user interface for guiding the user so that this algorithm works well is significantly important. It is desirable to devise it not to interfere with the sense of immersion at that time.

Secondly, the map synchronization will be described from the perspective of the user interface. In the AR application, it is important to devise it for guiding the user in order to acquire an image having a field-of-view common to the terminals. However, the user using the terminal cannot access the map, so the user cannot know what like an image retained in the map is and whether or not it is possible to determine a correspondence relation for map synchronization. Therefore, the AR application allows only a non-intuitive instruction, e.g., "to direct the terminal to a similar position," such an operation, for which some training is needed, is a little bit difficult for the user, and thus it may interfere with the sense of immersion into the AR content. For example, an application to capture an image common to the terminals in accordance with an instruction to image any common objects, thereby realizing synchronization between the maps, is known. However, this operation requires the user to do a lot of training, so it is not intuitive. In addition, since the user cannot even know internal conditions of the map for synchronization, an error message to the user is also non-intuitive because its explanation is insufficient for the user.

In this manner, the user does not know the map synchronization algorithm and cannot know its internal conditions. The first reason why the user interface for map synchronization has been non-intuitive is because it is difficult for the user to recognize a cause and effect relationship between the instruction "to direct the camera to an object common to the terminals" and the capability of "realizing synchronization between the maps." In particular, in order to realize synchronization between the maps, it is necessary to consider the following points to note derived from the algorithm.

(1) To select a bright place where the user easily captures an image with a clear luminance change. (2) To avoid a scene with no textures (e.g., white wall). (3) To avoid repeated pattern (e.g., floor tiles) even with a texture. (4) To capture an image so that an area common to images captured by terminals occupies a large part of the screen. (5) To perform a translation other than a pure rotation of each terminal in order to realize three-dimensional landmark estimation in the map.

Primarily, (1) to (4) are points to note for two-dimensional feature point extraction and (5) is a point to note for three-dimensional landmark estimation. If those implicit rules are necessary, the usability is significantly bad from the perspective of the user interface.

In the present embodiment, a more intuitive user interface and an algorithm for realizing it are proposed, focusing on the fact that the above-mentioned non-intuitive user interface is derived from the conventional map synchronization algorithm.

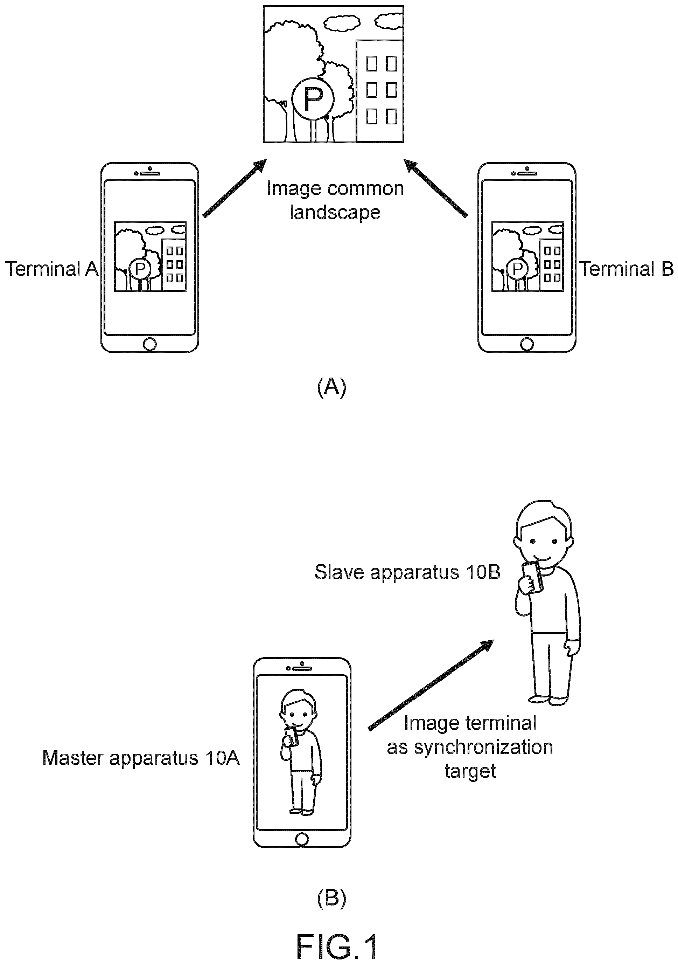

Fig. 1 shows a concept of the present embodiment.

Typically, as shown in (A), a method of acquiring an image having a field-of-view common to the terminals is simple implementation from the perspective of a VSLAM algorithm. However, the cause and effect relationship between directing the terminal in the same direction and performing map synchronization is unclear for the user and the user needs to consider the implicit points to note for realizing map synchronization, so it is difficult.

In this regard, as shown in (B), in the present embodiment, an operation in which "users who wish to perform map synchronization direct their terminals to each other so that one terminal images the other terminal" is proposed as a more intuitive user interface. An instruction to "direct the terminals wished to be synchronized to each other" is significantly easy to understand for the users because the cause and effect relationship for map synchronization is clear.

In addition, since it is unnecessary to indirectly perform synchronization by using the map in this method, the user does not need to achieve the implicit points to note like (1) to (5) above. Thus, the user can be expected to enjoy AR content more naturally without losing the sense of immersion. Moreover, many derivatives of this user interface for map synchronization can be conceived. For example, the users may image their terminals or one user may image a QR (registered trademark) code displayed on the screen of the other user's terminal. It can be changed as appropriate depending on required accuracy or an AR application.

2. Overview of Present Embodiment

As shown in (B) of Fig. 1, an information processing apparatus 10 according to the present embodiment is an end user terminal (e.g., a smartphone) with a camera and a display. One information processing apparatus 10 used by a certain user functions as a master and will be referred to as a master apparatus 10A. Another information processing apparatus 10 as a synchronization target used by another user functions as a slave and will be referred to as a slave apparatus 10B. The information processing apparatus 10 is capable of functioning as either one of the master apparatus 10A and the slave apparatus 10B. The master apparatus 10A and the slave apparatus 10B are capable of communicating with each other via a network such as the Internet. The master apparatus 10A images the slave apparatus 10B and synchronizes maps of the master apparatus 10A and the slave apparatus 10B on the basis of a position of the slave apparatus 10B in the captured image.

3. Functional Configurations of Master Apparatus and Slave Apparatus

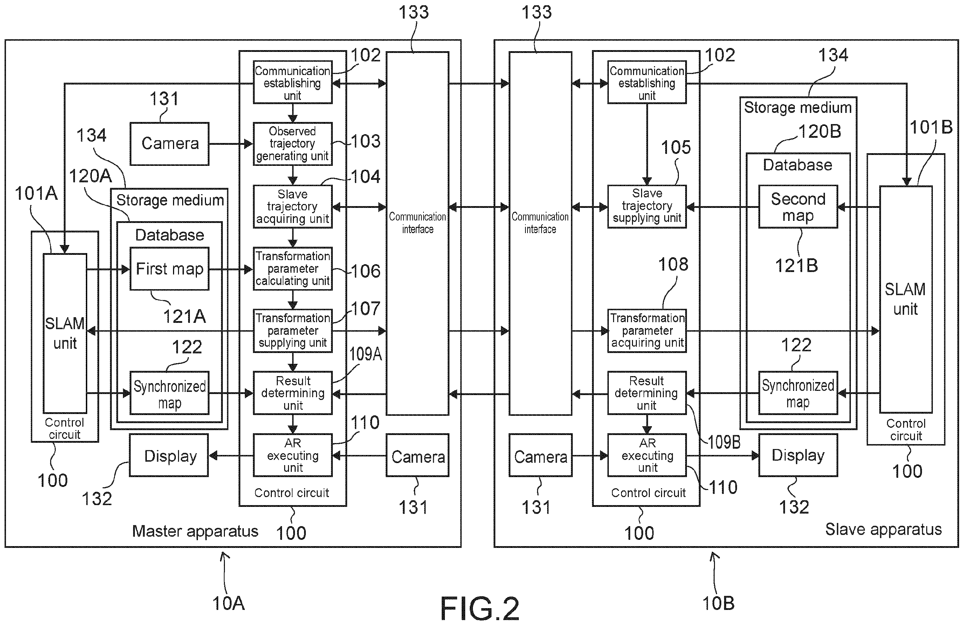

Fig. 2 shows functional configurations of the master apparatus and the slave apparatus.

The information processing apparatus 10 includes, as hardware configurations, a control circuit 100, a camera 131, a display 132, a communication interface 133, and a nonvolatile storage medium 134 with large capacity, such as a flash memory. The control circuit 100 includes a CPU, a ROM, and a RAM. The storage medium 134 stores a database 120A or 120B.

The information processing apparatus 10 operates as a SLAM unit 101A or 101B (map generating unit), a communication establishing unit 102, a result determining unit 109A or 109B, and an AR executing unit 110 by the CPU loading an information processing program (AR application) recorded on the ROM and executing it in the RAM in the control circuit 100. When the information processing apparatus 10 functions as a master, the information processing apparatus 10 further operates as an observed trajectory generating unit 103, a slave trajectory acquiring unit 104, a transformation parameter calculating unit 106, and a transformation parameter providing unit 107. When the information processing apparatus 10 functions as a slave, the information processing apparatus 10 further operates as a slave trajectory providing unit 105 and a transformation parameter acquiring unit 108.

4. Operation Flows of Master Apparatus and Slave Apparatus

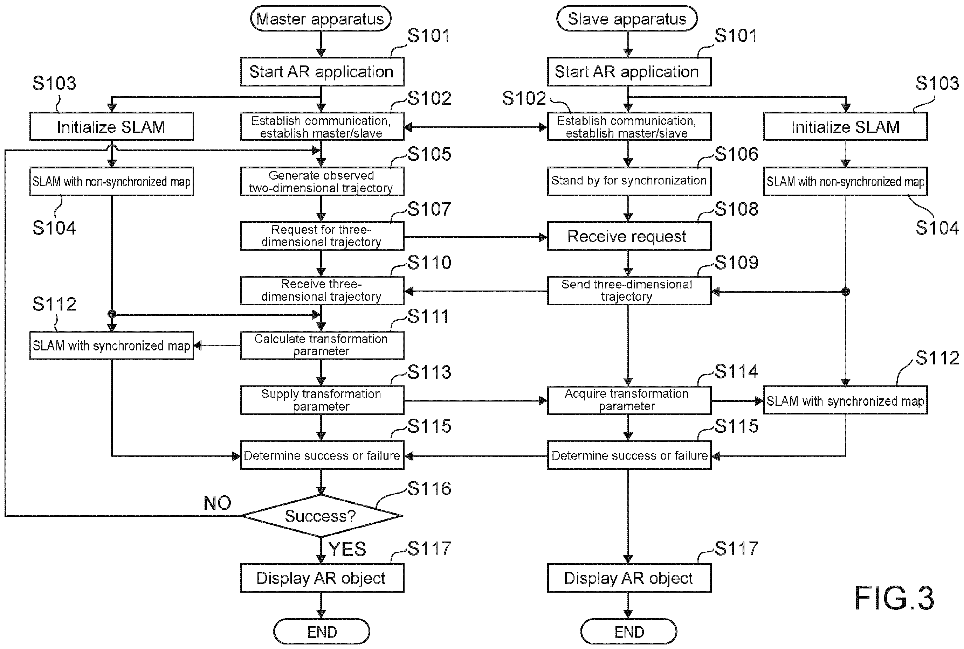

Fig. 3 shows operation flows of the master apparatus and the slave apparatus.

The plurality of information processing apparatuses 10 starts a common AR application (Step S101). The communication establishing units 102 of the plurality of information processing apparatuses 10 establish a communication protocol and establish pairing of the synchronization target so that one of them is the master apparatus 10A and the other is the slave apparatus 10B (Step S102).

On the other hand, immediately after the AR application is started (Step S101), the SLAM units 101A and 101B (map generating units) of the master apparatus 10A and the slave apparatus 10B in the background each initialize SLAM (Step S103) and generate an original non-synchronized map and at the same time estimate a chronological self-position in the non-synchronized map, thereby continuing to generate a three-dimensional trajectory (Step S104). Specifically, the "self-position" includes a position and an attitude of the built-in camera 131.

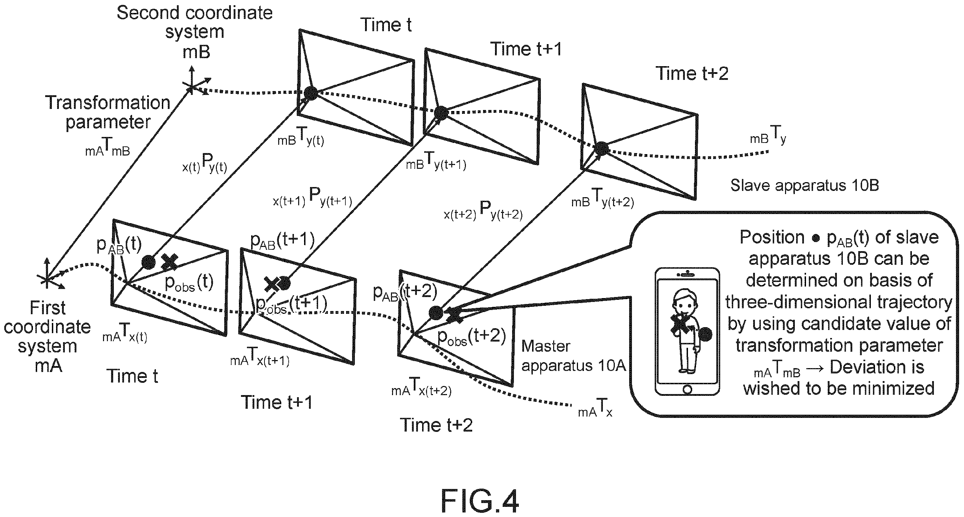

Fig. 4 schematically shows a map synchronization algorithm.

Specifically, the SLAM unit 101A of the master apparatus 10A uniquely generates a first map 121A using a first coordinate system mA as a reference and estimates a chronological self-position in the first map 121A, thereby generating a first three-dimensional trajectory $_{mA}T_X$. The first three-dimensional trajectory $_{mA}T_X$ includes a self-position $_{mA}T_{X(t)}$ at a time t, a self-position $_{mA}T_{X(t+1)}$ at a time t+1, a self-position $_{mA}T_{X(t+2)}$ at a time t+2, and so on. The SLAM unit 101A of the master apparatus 10A continues to store, in the database 120A, the first map 121A uniquely generated and the first three-dimensional trajectory $_{mA}T_X$ in the first map 121A (Step S104).

On the other hand, a SLAM unit 101B of the slave apparatus 10B uniquely generates a second map 121B using a second coordinate system mB as a reference and estimates a chronological self-position in the second map 121B, thereby generating a second three-dimensional trajectory $_{mB}T_Y$. The second three-dimensional trajectory $_{mB}T_Y$ includes a self-position $_{mB}T_{Y(t)}$ at the time t, a self-position $_{mB}T_{Y(t+1)}$ at the time t+1, a self-position $_{mB}T_{Y(t+2)}$ at the time t+2, and so on. The SLAM unit 101B of the slave apparatus 10B continues to store, in the database 120B, the uniquely generated second map 121B and the second three-dimensional trajectory $_{mB}T_Y$ in the second map 121B (Step S104).

The observed trajectory generating unit 103 of the master apparatus 10A displays a message on the display 132 so as to prompt the user to image the slave apparatus 10B with the camera 131 while performing a translation for accurate map synchronization for a predetermined time.

The camera 131 of the master apparatus 10A is capable of obtaining a captured image by imaging the slave apparatus 10B for the predetermined time. The observed trajectory generating unit 103 of the master apparatus 10A generates an observed two-dimensional trajectory $p_{obs}$ which is a two-dimensional trajectory indicating a chronological position of the slave apparatus 10B in the captured image (Step S105). The observed two-dimensional trajectory $p_{obs}$ includes an observed two-dimensional position $p_{obs}(t)$ of the slave apparatus 10B in a captured image at the time t, an observed two-dimensional position $p_{obs}(t+1)$ of the slave apparatus 10B in a captured image at the time t+1, an observed two-dimensional position $p_{obs}(t+2)$ of the slave apparatus 10B in a captured image at the time t+2, and so on. Meanwhile, the slave apparatus 10B stands by (Step S106).

Then, the slave trajectory acquiring unit 104 of the master apparatus 10A requests the slave apparatus 10B to send the second three-dimensional trajectory $_{mB}T_Y$ in the second map 121B using the second coordinate system mB as a reference (Step S107).

When the slave trajectory providing unit 105 of the slave apparatus 10B receives the request (Step S108), the slave trajectory providing unit 105 of the slave apparatus 10B reads out from the database 120B the second three-dimensional trajectory $_{mB}T_Y$ in the second map 121B using the second coordinate system mB as a reference and sends the second three-dimensional trajectory $_{mB}T_Y$ to the master apparatus 10A (Step S109).

The slave trajectory acquiring unit 104 of the master apparatus 10A receives from the slave apparatus 10B the second three-dimensional trajectory $_{mB}T_Y$ in the second map 121B using the second coordinate system mB as a reference (Step S110).

The transformation parameter calculating unit 106 of the master apparatus 10A calculates, on the basis of the first three-dimensional trajectory $_{mA}T_X$, the second three-dimensional trajectory $_{mB}T_Y$, and the observed two-dimensional trajectory $p_{obs}$, a transformation parameter $_{mA}T_{mB}$ for generating a synchronized map in which the first map 121A and the second map 121B are synchronized (Step Sill). More specifically, the transformation parameter calculating unit 106 calculates the transformation parameter $_{mA}T_{mB}$ on the basis of the respective points of the first three-dimensional trajectory $_{mA}T_X$, the second three-dimensional trajectory $_{mB}T_Y$, and the observed two-dimensional trajectory $p_{obs}$ at three or more synchronization times (t, t+1, t+2).

In other words, the transformation parameter calculating unit 106 calculates the transformation parameter $_{mA}T_{mB}$ on the basis of a set of the self-position $_{mA}T_{X(t)}$ of the master apparatus 10A, the self-position $_{mB}T_{Y(t)}$ of the slave apparatus 10B, and the observed two-dimensional position $p_{obs}(t)$ of the slave apparatus 10B at the synchronization time t, a set of the self-position $_{mA}T_{X(t+1)}$ of the master apparatus 10A, the self-position $_{mB}T_{Y(t+1)}$ of the slave apparatus 10B, and the observed two-dimensional position $p_{obs(t+1)}$ of the slave apparatus 10B at the synchronization time (t+1), and a set of the self-position $_{mA}T_{X(t+2)}$ of the master apparatus 10A, the self-position $_{mB}T_{Y(t+2)}$ of the slave apparatus 10B, and the observed two-dimensional position $p_{obs(t+2)}$ of the slave apparatus 10B at the synchronization time (t+2).

Specifically, the transformation parameter calculating unit 106 estimates a two-dimensional trajectory of the slave apparatus 10B and generates an estimated two-dimensional trajectory $p_{AB}$ on the basis of a candidate value of the transformation parameter $_{mA}T_{mB}$, the first three-dimensional trajectory $_{mA}T_X$, and the second three-dimensional trajectory $_{mB}T_Y$. The estimated two-dimensional trajectory $p_{AB}$ includes an estimated two-dimensional position $p_{AB}(t)$ of the slave apparatus 10B in the captured image at the time t, an estimated two-dimensional position $p_{AB}(t+1)$ of the slave apparatus 10B in the captured image at the time t+1, an estimated two-dimensional position $p_{AB}(t+2)$ of the slave apparatus 10B in the captured image at the time t+2, and so on. Then, the transformation parameter calculating unit 106 optimizes the candidate value of the transformation parameter $_{mA}T_{mB}$ so that the estimated two-dimensional trajectory

$p_{AB}$ (including dots in Fig. 4) coincides with the observed two-dimensional trajectory $p_{obs}$ (including the cross mark in Fig. 4) (i.e., so as to minimize a deviation), thereby calculating the transformation parameter $_{mA}T_{mB}$.

More specifically, the transformation parameter calculating unit 106 calculates a chronological position of the slave apparatus 10B in the first map 121A using the first coordinate system mA as a reference on the basis of the first three-dimensional trajectory $_{mA}T_x$ and the second three-dimensional trajectory $_{mB}T_Y$. Then, the transformation parameter calculating unit 106 optimizes the candidate value of the transformation parameter $_{mA}T_{mB}$ on the basis of the chronological position of the slave apparatus 10B in the first map 121A using the first coordinate system mA as a reference.

Here, if an unknown value $_{mA}T_{mB}$ is correct, $p_{obs}(t)$ should coincide with $p_{AB}(t)$. Therefore, the candidate value of $_{mA}T_{mB}$ is successively adjusted so as to obtain the coincidence, and once a distance between $p_{obs}(t)$ and $p_{AB}(t)$ is reduced to a certain level, the value of $_{mA}T_{mB}$ at that time is determined as a final solution. An approach for determining this solution is based on a well-known method as a PnP algorithm. Although the description "reduce the position at only the time t" is made here for the sake of simplification, $_{mA}T_{mB}$ can be actually adjusted only with three or more pairs of times according to the PnP algorithm. Thus, it is necessary to reduce all "distances between $p_{obs}(t)$ and $p_{AB}(t)$" at each of the times t = n, n+1, n+2, ..., N.

Hereinafter, the processing (Step Sill) of the transformation parameter calculating unit 106 will be described in more detail.

The estimated two-dimensional position $p_{AB}(t)$ of the slave apparatus 10B in the captured image at the time t obtained by the master apparatus 10A at each time t can be determined in accordance with Expression (2) below.

$$p_{AB}(t) = \Pi(K(_{x(t)}P_{y(t)})) = \Pi(K(_{mA}T_{x(t)})^{-1}{}_{mA}T_{mB}(_{mB}T_{y(t)})[:3, 4]) \ldots (2)$$

In Expression (2), K denotes internal parameters (a 3x3 matrix) of the camera of the master apparatus 10A and $\Pi$ denotes a projection function and expresses Expression (3) below.

$$\Pi([xyz]^T) = (x/z, y/z)^T \ldots (3)$$

In Expression (2), the arithmetic operation [:3, 4] corresponds to an operation of "retrieving an element at 3rd row, 4th column from above" from a 4x4 matrix. It means retrieving a translation component from a SE(3) matrix constituted by translation and rotation components. The transformation parameter $_{mA}T_{mB}$ between the first map 121A using the first coordinate system mA as a reference and the second map 121B using the second coordinate system mB as a reference is wished to be optimized so that this estimation result $p_{AB}(t)$ coincides with $p_{obs}(t)$ that is an observation result at any time t when observation is performed. Therefore, a target function E is the sum of projection errors at the plurality of times (t, t+1, t+2) and Expression (4) below is established.

$$E(_{mA}T_{mB}) = \Sigma(|p_{AB}(t) - p_{obs}(t)|) \ldots (4)$$

Expression (4) means Expression (5) below.

$$E(_{mA}T_{mB}) = \Sigma|p_{obs}(t) - \Pi(_{mA}T_{mB}, {}_{mA}T_{x(t)}, {}_{mB}T_{y(t)})| \ldots (5)$$

This optimization is formulation similar to a PnP problem of determining a relative attitude so that there is no positional contradiction between the three-dimensional landmark and the two-dimensional image position. In the PnP problem, as three or more correspondence relations are required in order to determine a solution, observation at three or more times (t, t+1, t+2) is required in order to uniquely determine an estimation result of the transformation parameter $_{mA}T_{mB}$ between the maps also in a case of this algorithm. In addition, since the master apparatus 10A and/or the slave apparatus 10B is being translated (Step S105), no local solutions are determined.

The SLAM unit 101A of the master apparatus 10A transforms the first map 121A using the uniquely generated first coordinate system mA as a reference on the basis of the transformation parameter $_{mA}T_{mB}$ calculated (Step Sill) by the transformation parameter calculating unit 106, thereby generating a synchronized map 122 using mA&B as a reference and at the same time estimating a chronological self-position in the synchronized map 122. In this manner, the SLAM unit 101A of the master apparatus 10A continues to generate a three-dimensional trajectory (Step S112).

The transformation parameter providing unit 107 of the master apparatus 10A provides the transformation parameter $_{mA}T_{mB}$ calculated (Step Sill) by the transformation parameter calculating unit 106 to the slave apparatus 10B (Step S113).

The transformation parameter acquiring unit 108 of the slave apparatus 10B acquires the transformation parameter $_{mA}T_{mB}$ from the master apparatus 10A (Step S114).

The SLAM unit 101B of the slave apparatus 10B transforms the second map 121B using the uniquely generated second coordinate system mB as a reference on the basis of the transformation parameter $_{mA}T_{mB}$ acquired from the master apparatus 10A, thereby generating a synchronized map 122 using a synchronized coordinate system mA&B as a reference and at the same time estimating a chronological self-position in the synchronized map 122. In this manner, the SLAM unit 101B of the slave apparatus 10B continues to generate a three-dimensional trajectory (Step S112).

The result determining unit 109B of the slave apparatus 10B determines a success or failure of the synchronized map 122 using the synchronized coordinate system mA&B generated (Step S112) by the SLAM unit 101B using the transformation parameter $_{mA}T_{mB}$ as a reference and sends a synchronization result indicating the success or failure to the master apparatus 10A (Step S115).

The result determining unit 109A of the master apparatus 10A receives the synchronization result from the slave apparatus 10B. The result determining unit 109A determines a success or failure of the synchronized map 122 by using the synchronized coordinate system mA&B generated (Step S112) by the SLAM unit 101A using the transformation parameter $_{mA}T_{mB}$ as a reference (Step S115).

In a case where the result determining unit 109A of the master apparatus 10A determines that the synchronized map 122 using the synchronized coordinate system mA&B generated by at least one of the master apparatus 10A or the slave apparatus 10B as a reference has failed (Step S116, NO), the result determining unit 109A of the master apparatus 10A determines to redo the synchronization processing (Step S105) after the communication is established (Step S102).

On the other hand, in a case where the result determining unit 109A of the master apparatus 10A determines that the synchronized coordinate system mA&B generated by both the master apparatus 10A and the slave apparatus 10B has succeeded (Step S116, YES), the result determining unit 109A of the master apparatus 10A completes the synchronization processing and determines to start display of the AR object.

The AR executing units 110 of the master apparatus 10A and the slave apparatus 10B generate an AR object on the basis of the synchronized map by using the synchronized coordinate system mA&B as a reference. The AR executing unit 110 displays the display 132 so that the AR object is superimposed on the environment image captured by the camera 131 (Step S117). Specifically, the AR executing units 110 of the master apparatus 10A and the slave apparatus 10B generate and display AR objects of common AR content. For example, the AR executing units 110 of the master apparatus 10A and the slave apparatus 10B generate and display the AR object (object when viewed from another position) of the common AR content (common character).

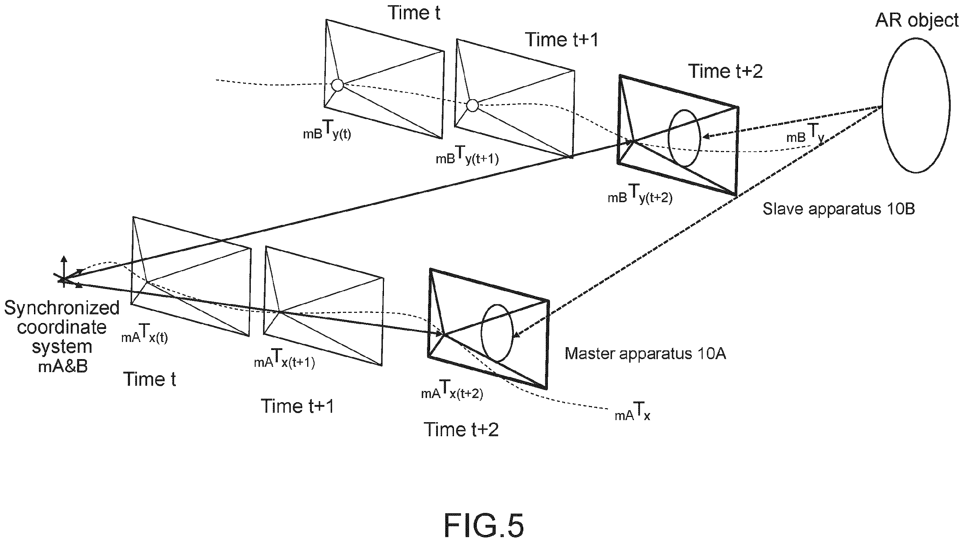

Fig. 5 schematically shows a state in which the master apparatus and the slave apparatus generate and display the AR object on the basis of the synchronized map.

As shown in Fig. 5, the relative positions of the master apparatus 10A and the slave apparatus 10B is known if the transformation parameter $_{mA}T_{mB}$ is known. Therefore, the AR object when the common AR content is viewed from another position can be displayed on the master apparatus 10A and the slave apparatus 10B that are different terminals without discomfort. In other words, the master apparatus 10A (the slave apparatus 10B) is capable of displaying the AR object as one visible when the common AR content located in a particular position can be viewed from the position of the master apparatus 10A (from the position of the slave apparatus 10B) without positional contradiction.

5. Modified Examples

As a method of realizing position tracking in the image, i.e., a method of generating the observed two-dimensional trajectory $p_{obs}$ (Step S105), several settings and an approach therefor can be conceived. Therefore, the user interface can be derived in accordance with each approach. Hereinafter, some methods will be described.

(1) Hypothesis Selection of Terminal Position by RANSAC

In a case where an image of the slave apparatus 10B as the synchronization target is captured, it is general that the captured image includes not only the slave apparatus 10B, but also the user holding the slave apparatus 10B, the background landscape, and the like. It is necessary to recognize and track the terminal position in such a scene showing various elements. In this approach, while tracking a feature point extracted from the image, a hypothesis closest to a candidate of the terminal position among them is selected. Specifically, with respect to each of selected tracking result candidates, transformed coordinates between the current map and the subsequent map are determined, assessment values of the respective results are compared with each other, and a most appropriate candidate is selected as a final solution (such a hypothesis selection method is called RANSAC). This method employs the most flexible setting and requires a light computational load. However, its accuracy is predicted to become unstable. In such a case, a method of not only selecting a hypothesis in the slave apparatus 10B from the master apparatus 10A, but also considering a result in the master apparatus 10A from the slave apparatus 10B and setting it as a constraint is expected.

(2) Terminal Position Tracking by DNN

In a task of recognizing a terminal position in the situation where the image includes various elements as in the first approach, it can be expected to make use of recognition results by deep learning (DNN: Deep Neural Network) which have been studied intensively in recent years. Since deep learning provides excellent accuracy for object recognition, accurate recognition of the terminal position can be expected by performing learning to recognize terminals similarly.

(3) Terminal Position Recognition by Light Emission Pattern of Terminal

In a generally-used smartphone terminal, a light is generally attached to the back surface. Recognition of the terminal position can be expected by controlling a light emission pattern of such a light.

In the above examples (1) to (3), the map synchronization is expected to be realized without issuing special instructions to the user. However, their algorithms may be slightly difficult in view of robustness in a case where they are actually implemented as products. In view of this, as a modified example, alleviating this setting will be assumed. An algorithm example in such a case will be described in (4) .

(4) Position Recognition by QR (Registered Trademark) Code Recognition Displayed on Terminal Screen

Hereinabove, it has been primarily assumed that the terminal position is recognized in the state in which the back surface of the terminal as a synchronization target faces the user, displaying a QR (registered trademark) code on the screen of the synchronization target terminal by alleviating that condition will be assumed. Accordingly, instruction requests to the user slightly increases while it is possible to correctly determine the terminal position as the synchronization target with a QR (registered trademark) code.

6. Conclusion

In general, the map synchronization between the terminal A and the terminal B is realized by processing of (1) sending the image data to the terminal B from the terminal A, (2) performing image search on a key frame having a field-of-view common to the image in the map of the terminal B, and (3) estimating a position in the map on the basis of a feature point correspondence relation and determining a transformed coordinate system. Due to such algorithm characteristics, it is general to "capture a common scene image" between terminals for map synchronization. Due to the characteristics of this algorithm, there has been a problem in that a slightly non-intuitive operation to the user is required and it may interfere with the sense of immersion into AR experience.

In this regard, in the present embodiment, it is possible to improve the operation for the conventional map synchronization, which has been non-intuitive due to the algorithm characteristics when performing SLAM among a plurality of terminals, and to realize a more intuitive user interface and an algorithm enabling it. Specifically, the present embodiment proposes an "operation of imaging an apparatus wished to be synchronized" as a more intuitive synchronization operation. The operation of directing apparatuses wished to be synchronized to each other is significantly intuitive. Accordingly, the user can enjoy AR content naturally without losing the sense of immersion. In addition, since the above-mentioned typical algorithm cannot cope with such map synchronization, a new map synchronization algorithm between terminals that enables it is proposed.

In a case of "imaging a common scene image" between terminals for map synchronization, in particular, in order to realize synchronization between the maps, it is necessary to consider the following points to note derived from the algorithm. Since such implicit rules are necessary, the usability is significantly bad from the perspective of the user interface.

(1) To select a bright place where the user easily capture an image with a clear luminance change. (2) To avoid a scene with no textures (e.g., white wall). (3) To avoid repeated pattern (e.g., floor tiles) even with a texture. (4) To capture an image so that an area common to images captured by terminals occupies a large part of the screen. (5) To perform a translation other than a pure rotation of each terminal in order to realize three-dimensional landmark estimation in the map.

In this regard, in the present embodiment, those points to note become unnecessary or decreases: (1) this is not essential for map synchronization in a modified example when a QR (registered trademark) code is recognized; (2) and (3) these do not depend on a background scene because terminals are directly recognized; these do not depend on a background scene because terminals are directly recognized; (4) the concept of the common field-of-view does not exist because the algorithm is different; and (5) strict translation is unnecessary because triangulation is unnecessary. It should be noted that behaviors are stabilized with a certain motion.

In this manner, in the present embodiment, the terminal position is directly observed and optimization is performed on the basis of its result. Therefore, it is possible to reduce the points to note which the user is implicitly required to consider when using the above-mentioned map synchronization method. In particular, the portion largely depending on a texture of a common scene required for map synchronization becomes unnecessary by directly recognizing a terminal. It can largely reduce the difficulty of the map synchronization. In addition, by a certain degree can also be reduced to some extent because it is not essential to extract feature points for map synchronization and it becomes necessary to perform translation for triangulation because a three-dimensional landmark is unnecessary, and it is thus possible to reduce obstacles. An advantage that the user only needs to concentrate in imaging a terminal that the user wishes to synchronize without the need for considering map conditions is a significant point of the present embodiment.

The present disclosure can include the following configurations.

(1) An information processing apparatus, including:

a map generating unit that generates a first map and estimates a chronological self-position in the first map, thereby generating the first three-dimensional trajectory;
a slave trajectory acquiring unit that acquires the second three-dimensional trajectory generated by estimating the chronological self-position in a second map generated in the map generating unit of a slave apparatus, the slave apparatus being another information processing apparatus that functions as a slave;
an observed trajectory generating unit that generates an observed two-dimensional trajectory, the observed two-dimensional trajectory being a two-dimensional trajectory indicating a chronological position of the slave apparatus in a captured image obtained by a camera imaging the slave apparatus; and
a transformation parameter calculating unit that calculates a transformation parameter for generating a synchronized map obtained by synchronizing the first map with the second map on the basis of the first three-dimensional trajectory, the second three-dimensional trajectory, and the observed two-dimensional trajectory.

(2) The information processing apparatus according to (1), in which
the transformation parameter calculating unit

estimates a two-dimensional trajectory of the slave apparatus and generates an estimated two-dimensional trajectory on the basis of a candidate value of a transformation parameter, the first three-dimensional trajectory, and the second three-dimensional trajectory, and
optimizes the candidate value of the transformation parameter so that the estimated two-dimensional trajectory coincides with the observed two-dimensional trajectory, thereby calculating the transformation parameter.

(3) The information processing apparatus according to (2), in which
the transformation parameter calculating unit

calculates the chronological position of the slave apparatus in the first map on the basis of the first three-dimensional trajectory and the second three-dimensional trajectory, and
optimizes the candidate value of the transformation parameter on the basis of the calculated chronological position of the slave apparatus in the first map.

(4) The information processing apparatus according to any one of (1) to (3), in which
the map generating unit transforms the first map on the basis of the transformation parameter, thereby generating the synchronized map.
(5) The information processing apparatus according to any one of (1) to (4), further including

a transformation parameter providing unit that provides the transformation parameter to the slave apparatus, in which
the map generating unit of the slave apparatus transforms the second map on the basis of the transformation parameter, thereby generating the synchronized map.

(6) The information processing apparatus according to any one of (1) to (5), further including
an AR executing unit that generates an AR object on the basis of the synchronized map and displays the generated AR object on a display apparatus.
(7) The information processing apparatus according to (6), in which

the AR executing unit of the information processing apparatus that functions as a master and the AR executing unit of the slave apparatus generate and display an AR object of common AR content.

(8) The information processing apparatus according to any one of (1) to (7), further including

a slave trajectory providing unit that provides the second three-dimensional trajectory to another information processing apparatus that functions as a master when the slave trajectory providing unit functions as a slave.

(9) The information processing apparatus according to any one of (1) to (8), further including

the camera, in which
the self-position includes a position and an attitude of the camera.

(10) An information processing method, including:

generating a first map and estimating a chronological self-position in the first map, thereby generating the first three-dimensional trajectory;
acquiring the second three-dimensional trajectory generated by estimating the chronological self-position in a second map generated in a map generating unit of a slave apparatus, the slave apparatus being another information processing apparatus that functions as a slave;
generating an observed two-dimensional trajectory, the observed two-dimensional trajectory being a two-dimensional trajectory indicating a chronological position of the slave apparatus in a captured image obtained by a camera imaging the slave apparatus; and
calculating a transformation parameter for generating a synchronized map obtained by synchronizing the first map with the second map on the basis of the first three-dimensional trajectory, the second three-dimensional trajectory, and the observed two-dimensional trajectory.

(11) An information processing program that causes a control circuit of an information processing apparatus to operate as:

a map generating unit that generates a first map and estimates a chronological self-position in the first map, thereby generating the first three-dimensional trajectory;
a slave trajectory acquiring unit that acquires the second three-dimensional trajectory generated by estimating the chronological self-position in a second map generated in the map generating unit of a slave apparatus, the slave apparatus being another information processing apparatus that functions as a slave;
an observed trajectory generating unit that generates an observed two-dimensional trajectory, the observed two-dimensional trajectory being a two-dimensional trajectory indicating a chronological position of the slave apparatus in a captured image obtained by a camera imaging the slave apparatus; and
a transformation parameter calculating unit that calculates a transformation parameter for generating a synchronized map obtained by synchronizing the first map with the second map on the basis of the first three-dimensional trajectory, the second three-dimensional trajectory, and the observed two-dimensional trajectory.

(12) A non-transitory computer-readable recording medium recording an information processing program that causes a control circuit of an information processing apparatus to operate as:

a map generating unit that generates a first map and estimates a chronological self-position in the first map, thereby generating the first three-dimensional trajectory;
a slave trajectory acquiring unit that acquires the second three-dimensional trajectory generated by estimating the chronological self-position in a second map generated in the map generating unit of a slave apparatus, the slave apparatus being another information processing apparatus that functions as a slave;
an observed trajectory generating unit that generates an observed two-dimensional trajectory, the observed two-dimensional trajectory being a two-dimensional trajectory indicating a chronological position of the slave apparatus in a captured image obtained by a camera imaging the slave apparatus; and
a transformation parameter calculating unit that calculates a transformation parameter for generating a synchronized map obtained by synchronizing the first map with the second map on the basis of the first three-dimensional trajectory, the second three-dimensional trajectory, and the observed two-dimensional trajectory.

Although the embodiments and modified examples of the present technology have been described, the present technology is not limited only to the above-mentioned embodiments and can be variously modified without departing from the gist of the present technology as a matter of course.

Reference Signs List

| | |
|---|---|
| 10 | information processing apparatus |
| 100 | control circuit |
| 101A | SLAM unit |
| 101B | SLAM unit |
| 102 | communication establishing unit |
| 103 | observed trajectory generating unit |
| 104 | slave trajectory acquiring unit |
| 105 | slave trajectory providing unit |
| 106 | transformation parameter calculating unit |
| 107 | transformation parameter providing unit |
| 108 | transformation parameter acquiring unit |
| 109A | result determining unit |
| 109B | result determining unit |
| 10A | master apparatus |
| 10B | slave apparatus |
| 110 | AR executing unit |
| 120A | database |
| 120B | database |
| 121A | first map |
| 121B | second map |
| 122 | synchronized map |
| mA&B | synchronized coordinate system |
| mA | first coordinate system |
| $_{mA}T_{mB}$ | transformation parameter |
| mB | second coordinate system |

**Claims**

1. An information processing apparatus, comprising:

   a map generating unit that generates a first map and estimates a chronological self-position in the first map, thereby generating the first three-dimensional trajectory;
   a slave trajectory acquiring unit that acquires the second three-dimensional trajectory generated by estimating the chronological self-position in a second map generated in the map generating unit of a slave apparatus, the slave apparatus being another information processing apparatus that functions as a slave;
   an observed trajectory generating unit that generates an observed two-dimensional trajectory, the observed two-dimensional trajectory being a two-dimensional trajectory indicating a chronological position of the slave apparatus in a captured image obtained by a camera imaging the slave apparatus; and
   a transformation parameter calculating unit that calculates a transformation parameter for generating a synchronized map obtained by synchronizing the first map with the second map on a basis of the first three-dimensional trajectory, the second three-dimensional trajectory, and the observed two-dimensional trajectory.

2. The information processing apparatus according to claim 1, wherein
   the transformation parameter calculating unit

   estimates a two-dimensional trajectory of the slave apparatus and generates an estimated two-dimensional trajectory on a basis of a candidate value of a transformation parameter, the first three-dimensional trajectory, and the second three-dimensional trajectory, and
   optimizes the candidate value of the transformation parameter so that the estimated two-dimensional trajectory coincides with the observed two-dimensional trajectory, thereby calculating the transformation parameter.

3. The information processing apparatus according to claim 2, wherein
   the transformation parameter calculating unit

calculates the chronological position of the slave apparatus in the first map on a basis of the first three-dimensional trajectory and the second three-dimensional trajectory, and

optimizes the candidate value of the transformation parameter on a basis of the calculated chronological position of the slave apparatus in the first map.

4. The information processing apparatus according to claim 1, wherein
the map generating unit transforms the first map on a basis of the transformation parameter, thereby generating the synchronized map.

5. The information processing apparatus according to claim 1, further comprising

a transformation parameter providing unit that provides the transformation parameter to the slave apparatus, wherein

the map generating unit of the slave apparatus transforms the second map on a basis of the transformation parameter, thereby generating the synchronized map.

6. The information processing apparatus according to claim 1, further comprising
an AR executing unit that generates an AR object on a basis of the synchronized map and displays the generated AR object on a display apparatus.

7. The information processing apparatus according to claim 6, wherein
the AR executing unit of the information processing apparatus that functions as a master and the AR executing unit of the slave apparatus generate and display an AR object of common AR content.

8. The information processing apparatus according to claim 1, further comprising
a slave trajectory providing unit that provides the second three-dimensional trajectory to another information processing apparatus that functions as a master when the slave trajectory providing unit functions as a slave.

9. The information processing apparatus according to claim 1, further comprising

the camera, wherein
the self-position includes a position and an attitude of the camera.

10. An information processing method, comprising:

generating a first map and estimating a chronological self-position in the first map, thereby generating the first three-dimensional trajectory;
acquiring the second three-dimensional trajectory generated by estimating the chronological self-position in a second map generated in a map generating unit of a slave apparatus, the slave apparatus being another information processing apparatus that functions as a slave;
generating an observed two-dimensional trajectory, the observed two-dimensional trajectory being a two-dimensional trajectory indicating a chronological position of the slave apparatus in a captured image obtained by a camera imaging the slave apparatus; and
calculating a transformation parameter for generating a synchronized map obtained by synchronizing the first map with the second map on a basis of the first three-dimensional trajectory, the second three-dimensional trajectory, and the observed two-dimensional trajectory.

11. An information processing program that causes a control circuit of an information processing apparatus to operate as:

a map generating unit that generates a first map and estimates a chronological self-position in the first map, thereby generating the first three-dimensional trajectory;
a slave trajectory acquiring unit that acquires the second three-dimensional trajectory generated by estimating the chronological self-position in a second map generated in the map generating unit of a slave apparatus, the slave apparatus being another information processing apparatus that functions as a slave;
an observed trajectory generating unit that generates an observed two-dimensional trajectory, the observed two-dimensional trajectory being a two-dimensional trajectory indicating a chronological position of the slave apparatus in a captured image obtained by a camera imaging the slave apparatus; and
a transformation parameter calculating unit that calculates a transformation parameter for generating a synchronized map obtained by synchronizing the first map with the second map on a basis of the first three-dimensional trajectory, the second three-dimensional trajectory, and the observed two-dimensional trajectory.

Image common landscape

Terminal A

Terminal B

(A)

Slave apparatus 10B

Master apparatus 10A

Image terminal as synchronization target

(B)

FIG.1

FIG.2

FIG.3

FIG.4

Time t

Time t+1

Time t+2

AR object

$_{mB}T_{y(t)}$

$_{mB}T_{y(t+1)}$

$_{mB}T_{y(t+2)}$

$_{mB}T_y$

Slave apparatus 10B

Synchronized
coordinate
system
mA&B

$_{mA}T_{x(t)}$

Time t

$_{mA}T_{x(t+1)}$

Time t+1

$_{mA}T_{x(t+2)}$

Time t+2

Master apparatus 10A

$_{mA}T_x$

FIG.5

## INTERNATIONAL SEARCH REPORT

| | |
|---|---|
| | International application No. |
| | **PCT/JP2022/040096** |

**A. CLASSIFICATION OF SUBJECT MATTER**

*G01C 21/26*(2006.01)i; *G01C 21/28*(2006.01)i; *G06T 19/00*(2011.01)i; *G06T 7/292*(2017.01)i; *G06T 7/70*(2017.01)i
FI: G06T7/70 A; G06T19/00 600; G06T7/292; G01C21/28; G01C21/26 P

According to International Patent Classification (IPC) or to both national classification and IPC

**B. FIELDS SEARCHED**

Minimum documentation searched (classification system followed by classification symbols)

G01C21/26; G01C21/28; G06T19/00; G06T7/292; G06T7/70

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | CN 112762945 A (PCI SUNTEK TECH CO., LTD.) 07 May 2021 (2021-05-07) paragraphs [0064]-[0103] | 1-11 |
| A | WO 2021/106388 A1 (SONY CORPORATION) 03 June 2021 (2021-06-03) paragraphs [0012]-[0091] | 1-11 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 December 2022** | **10 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/040096**

| Patent document cited in search report | | | Publication date (day/month/year) | Patent family member(s) | Publication date (day/month/year) |
|---|---|---|---|---|---|
| CN | 112762945 | A | 07 May 2021 | (Family: none) | |
| WO | 2021/106388 | A1 | 03 June 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021106388 A